(19) **Europäisches Patentamt**
**European Patent Office**
**Office européen des brevets**

(11) **EP 4 561 038 A1**

(12) **EUROPEAN PATENT APPLICATION**
published in accordance with Art. 153(4) EPC

(43) Date of publication:
**28.05.2025 Bulletin 2025/22**

(21) Application number: **23855017.2**

(22) Date of filing: **22.06.2023**

(51) International Patent Classification (IPC):
**H04M 1/2749** (2020.01)   **H04M 1/72412** (2021.01)
**G04G 21/02** (2010.01)   **G04G 21/04** (2013.01)
**H04M 1/27453** (2020.01)

(52) Cooperative Patent Classification (CPC):
**G04G 21/02; G04G 21/04; H04M 1/27453;**
**H04M 1/2749; H04M 1/72412**

(86) International application number:
**PCT/KR2023/008708**

(87) International publication number:
**WO 2024/039046 (22.02.2024 Gazette 2024/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **19.08.2022 KR 20220104173**
**08.09.2022 KR 20220114423**

(71) Applicant: **Samsung Electronics Co., Ltd.**
**Suwon-si, Gyeonggi-do 16677 (KR)**

(72) Inventors:
• **YOON, Sangil**
**Suwon-si, Gyeonggi-do 16677 (KR)**
• **IM, Byungjai**
**Suwon-si, Gyeonggi-do 16677 (KR)**
• **JO, Yeonho**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **WEARABLE DEVICE AND METHOD FOR ESTABLISHING CALL CONNECTION WITH EXTERNAL ELECTRONIC DEVICE**

(57)     According to an embodiment, a wearable device comprises at least one communication circuit, a memory, at least one sensor, and a processor, wherein the processor is configured to identify, by using the at least one sensor, a first contact list from among contacts stored in the memory and a second contact list obtained from a first external electronic device, transmit, to a second external electronic device, a first signal for an outgoing call to the second external electronic device corresponding to a third contact from among pluralities of contacts included in the first contact list and the second contact list, and transmit, to the first external electronic device, a second signal causing the first external electronic device to transmit a third signal for an outgoing call to a third external electronic device corresponding to a fourth contact from among the pluralities of contacts.

FIG. 2

## Description

### [Technical Field]

The following descriptions relate to a wearable device and a method for establishing a call connection with an external electronic device.

### [Background Art]

Various services are provided through a wearable device. The wearable device may operate by being worn on a part of a body of a user. The wearable device may identify biometric information of the user in a state of being worn on the part of the body of the user, and provide a service based on the biometric information of the user. For example, the wearable device may identify the biometric information of the user using a plurality of sensors. The wearable device may identify various activity states of the user based on the identified the biometric information of the user.

### [Disclosure]

### [Technical Solution]

According to an embodiment, a wearable device may comprise at least one communication circuit, memory, at least one sensor, and a processor operably coupled to the at least one communication circuit, the memory, and the at least one sensor. The processor may be configured to identify, using the at least one sensor, that a user wearing the wearable device is in a designated state, and in response to identifying that the user is in the designated state, identify a first contact list among contacts stored in the memory and identify, using the at least one communication circuit, a second contact list obtained from a first external electronic device connected to the wearable device. The processor may be configured to transmit, using the at least one communication circuit, a first signal for an outgoing call to a second external electronic device corresponding to a third contact among a plurality of contacts included in the first contact list and the second contact list, to the second external electronic device. The processor may be configured to transmit, using the at least one communication circuit, a second signal causing the first external electronic device to transmit a third signal for an outgoing call to a third external electronic device corresponding to a fourth contact among the plurality of contacts, to the first external electronic device.

According to an embodiment, a method of a wearable device may comprise identifying, using at least one sensor of the wearable device, that a user wearing the wearable device is in a designated state. The method may comprise, in response to identifying that the user is in the designated state, identifying a first contact list among contacts stored in memory of the wearable device and identifying, using at least one communication circuit of the wearable device, a second contact list obtained from a first external electronic device connected to the wearable device. The method may comprise transmitting, using the at least one communication circuit, a first signal for an outgoing call to a second external electronic device corresponding to a third contact among a plurality of contacts included in the first contact list and the second contact list, to the second external electronic device. The method may comprise transmitting, using the at least one communication circuit, a second signal causing the first external electronic device to transmit a third signal for an outgoing call to a third external electronic device corresponding to a fourth contact among the plurality of contacts, to the first external electronic device.

According to an embodiment, a wearable device may comprise at least one communication circuit, memory, at least one sensor, and a processor operably coupled to the at least one communication circuit, the memory, and the at least one sensor. The processor may be configured to transmit, in response to a designated state of a user wearing the wearable device, using the at least one sensor, a first signal for a first connection between a first external electronic device and the electronic device to the first external electronic device, and transmit a second signal for a second connection between a second external electronic device and a third external electronic device to the second external electronic device, using the at least one communication circuit. The processor may be configured to identify whether one of a third signal from the first external electronic device indicating establishment of the first connection and a fourth signal from the second external electronic device indicating establishment of the second connection is received, in response to the transmission of the first signal and the transmission of the second signal. The processor may be configured to transmit a fifth signal indicating cessation of operations for the second connection to the second external electronic device, in response to receiving the third signal among the third signal and the fourth signal. The processor may be configured to cease operations for the first connection, in response to reception of the fourth signal among the third signal and the fourth signal.

**[Description of the Drawings]**

FIG. 1 is a block diagram of an electronic device in a network environment according to an embodiment.

FIG. 2 illustrates an environment including a wearable device and a first external electronic device according to an embodiment.

FIG. 3 is a simplified block diagram of a wearable device according to an embodiment.

FIG. 4 is a simplified block diagram of a first external electronic device according to an embodiment.

FIG. 5 illustrates a flowchart with respect to an operation of a wearable device according to an embodiment.

FIG. 6A illustrates an example of an operation of a wearable device and a first external electronic device according to an embodiment.

FIG. 6B illustrates an example of an operation of a wearable device and a first external electronic device according to an embodiment.

FIG. 7 illustrates an example of an operation of a wearable device and a first external electronic device according to an embodiment.

FIG. 8 illustrates an example of an operation of a wearable device and a first external electronic device according to an embodiment.

FIG. 9 illustrates an example of an operation of a wearable device and a first external electronic device according to an embodiment.

FIG. 10 illustrates an example of an operation of a wearable device and a first external electronic device according to an embodiment.

FIG. 11 illustrates an example of an operation of a wearable device and a first external electronic device according to an embodiment.

FIG. 12 illustrates a flowchart with respect to an operation of a wearable device according to an embodiment.

**[Mode for Invention]**

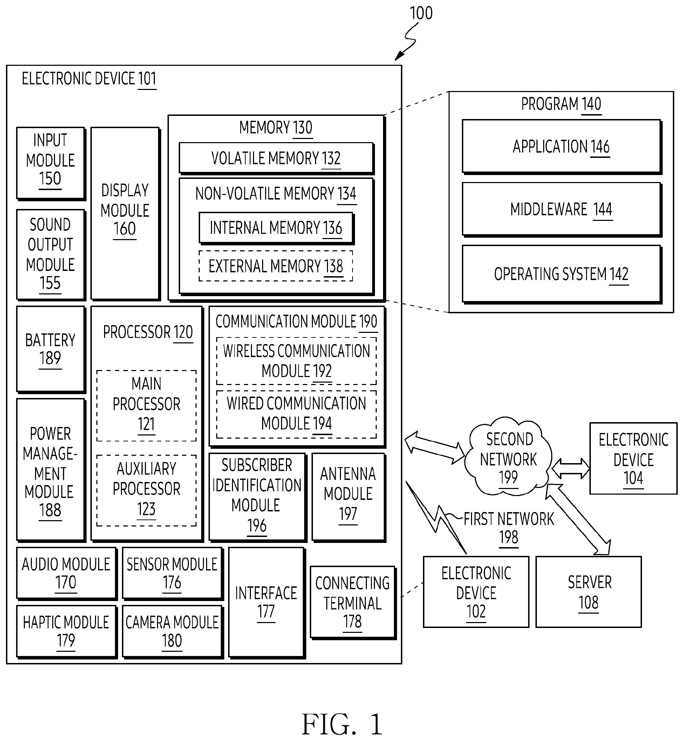

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, a wearable device may operate in a state of being worn by a user. The wearable device may identify that the user is in an emergency situation. For example, the wearable device may transmit information notifying that the user is in the emergency situation to a first external electronic device connected to the wearable device. The wearable device may request an emergency contact from the first external electronic device. The wearable device may identify the emergency contact, and then perform a telephone connection to the identified contact, or request the first external electronic device to perform the call connection to the identified contact.

According to an embodiment, the wearable device and the first external electronic device connected to the wearable device may perform operations to make a call to different users respectively in response to identifying that the user is in the emergency situation. In the following specification, an embodiment for the wearable device and the first external electronic device connected to the wearable device to make the call to different users respectively may be described.

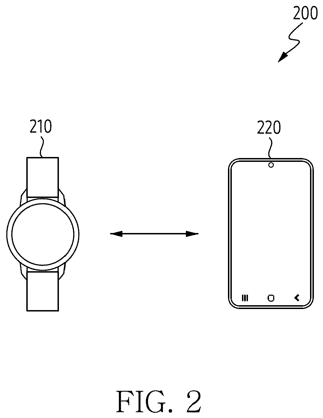

FIG. 2 illustrates an environment including a wearable device and a first external electronic device according to an embodiment.

Referring to FIG. 2, an environment 200 may include a wearable device 210 and a first external electronic device 220. A user of the wearable device 210 may be the same user as a user of the first external electronic device 220.

According to an embodiment, the wearable device 210 may operate in connection with the first external electronic device 220. For example, the wearable device 210 may transmit a signal for controlling an operation of the first external electronic device 220. The first external electronic device 220 may perform an identified operation based on the received signal. For example, the first external electronic device 220 may transmit a signal for controlling an operation of the wearable device 210. The wearable device 210 may transmit the signal for controlling the operation of the first external electronic device 220. The wearable device 210 may perform the identified operation based on the received signal.

According to an embodiment, the wearable device 210 and the first external electronic device 220 may operate independently. For example, the wearable device 210 may make a call with another external electronic device using a communication module of the wearable device 210 in a state that the wearable device 210 is not connected to the first external electronic device 220. The wearable device 210 may establish a call connection with a second external electronic device with respect to another user in the state that the wearable device 210 is not connected to the first external electronic device 220. The wearable device 210 may establish the call connection with the second external electronic device using a contact of the other user among contacts stored in the wearable device 210.

For example, the first external electronic device 220 may make a call with the other external electronic device using a communication module of the first external electronic device 220. The first external electronic device 220 may make the call with the other external device using the communication module of the first external electronic device 220 in a state that the first external electronic device 220 is not connected to the wearable device 210.

According to an embodiment, the wearable device 210 may operate in a state of being worn by the user. The wearable device 210 may obtain information on the user using at least one sensor included in the wearable device 210. The wearable device 210 may identify that the user is in a designated state based on the obtained information on the user. For example, the wearable device 210 may identify that the user is in an emergency situation. According to an embodiment, the wearable device 210 may transmit information notifying that the user is in the designated state to the first external electronic device 220.

In FIG. 2 the wearable device 210 is illustrated as a smart watch, but is not limited thereto. For example, the wearable device 210 may be implemented in various forms that may be worn by the user, such as smart glasses, a smart band, a smart ring, and wireless earphones.

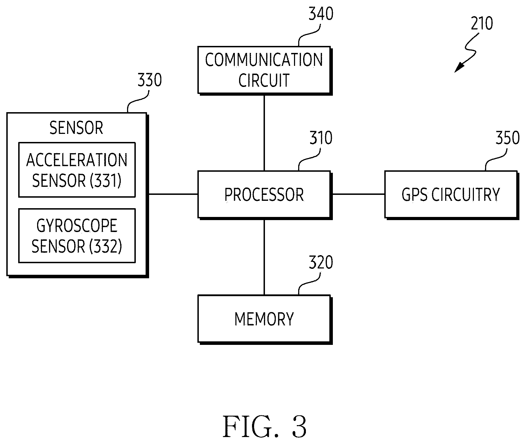

FIG. 3 is a simplified block diagram of a wearable device according to an embodiment.

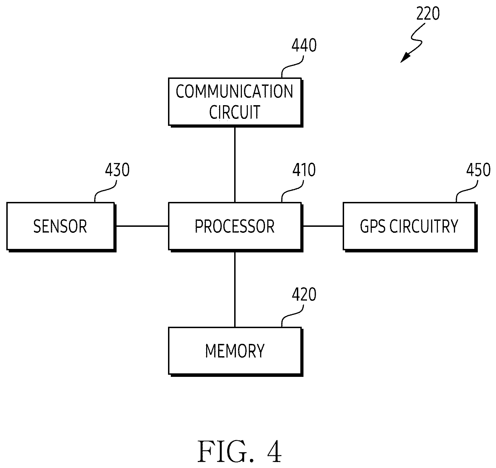

FIG. 4 is a simplified block diagram of a first external electronic device according to an embodiment.

Referring to FIG. 3, a wearable device 210 may include a portion or all of components of an electronic device 101 illustrated in FIG. 1. For example, the wearable device 210 may correspond to the electronic device 101 illustrated in FIG. 1.

According to an embodiment, the wearable device 210 may include a processor 310, memory 320, a sensor 330, a communication circuit 340, and/or global positioning system (GPS) circuitry 350. According to an embodiment, the wearable device 210 may include at least one of the processor 310, the memory 320, the sensor 330, the communication circuit 340, and the GPS circuitry 350. For example, at least a portion of the processor 310, the memory 320, the sensor 330, the communication circuit 340, and the GPS circuitry 350 may be omitted according to an embodiment.

According to an embodiment, the processor 310 may be operatively (or operably) coupled with or connect with the memory 320, the sensor 330, the communication circuit 340, and the GPS circuitry 350. For example, the processor 310 may control the memory 320, the sensor 330, the communication circuit 340, and the GPS circuitry 350. The memory 320, the sensor 330, the communication circuit 340, and the GPS circuitry 350 may be controlled by the processor 310. For example, the processor 310 may be configured with at least one processor. The processor 310 may include the at least one processor. For example, the processor 310 may correspond to the processor 120 of FIG. 1.

According to an embodiment, the processor 310 may include a hardware component for processing data based on one or more instructions. The hardware component for processing the data may include, for example, an arithmetic and logic unit (ALU), a field programmable gate array (FPGA), and/or a central processing unit (CPU).

According to an embodiment, the wearable device 210 may include the memory 320. For example, the memory 320 may be used to store information or data. For example, the memory 320 may correspond to the memory 130 of FIG. 1. For example, the memory 320 may be a volatile memory unit or units. For example, the memory 320 may be a nonvolatile memory unit or units. For example, the memory 320 may be another form of a computer-readable medium, such as a magnetic disk or an optical disk. For example, the memory 320 may be used to store data obtained from a user. For example, the memory 320 may store the data obtained based on an operation (e.g., an operation of identifying a movement of the user using the sensor 330) performed in the processor 310. For example, the memory 320 may be used to store contacts.

According to an embodiment, the wearable device 210 may include the sensor 330. The sensor 330 may be used to obtain various external information. For example, the sensor 330 may be used to obtain data on a body of the user. For example, the sensor 330 may be used to obtain the data on a state of the user, data on the movement of the user, and/or data on a heart rate of the user. For example, the sensor 330 may correspond to the sensor module 176 of FIG. 1.

According to an embodiment, the sensor 330 may be configured with at least one sensor. For example, the sensor 330 may include at least one of an acceleration sensor 331 and a gyroscope sensor 332.

For example, the acceleration sensor 331 may identify (or measure or detect) acceleration of the wearable device 210 in three directions of an x-axis, a y-axis, and a z-axis. For example, the gyroscope sensor 332 may identify (or measure or detect) angular velocity of the wearable device 210 in three directions of the x-axis, the y-axis, and the z-axis. According to an embodiment, the wearable device 210 may include a motion sensor configured with the acceleration sensor 331 and the gyroscope sensor 332.

Although not illustrated, the sensor 330 may further include a sensor for obtaining (or identifying, measuring, or detecting) various data on the user.

For example, the sensor 330 may include a PPG sensor. The PPG sensor may be used to measure a pulse (or change in an amount of blood in a blood vessel) by identifying an amount of change in light sensitivity according to a change in blood vessel volume. For example, the processor 310 may identify a sleep state or a non-sleep state (or active state) of the user based on biometric data obtained through the PPG sensor. For example, the PPG sensor may be used to identify information on heart rate variability of the user, information on stress of the user, information on a sleep stage of the user, information on a respiratory rate of the user, and information on blood pressure of the user, based on heart rate variability (HRV).

For example, the sensor 330 may include an atmospheric pressure sensor. The atmospheric pressure sensor may identify (or measure or detect) atmospheric pressure around the wearable device 210. The processor 310 may identify a height (or an altitude) at which the wearable device 210 is located from the ground based on data on the atmospheric pressure around the wearable device 210 identified using the atmospheric pressure sensor.

For example, the sensor 330 may include an electrode sensor. The processor 310 may identify (or measure) electrodermal activity (EDA) through the electrode sensor. The processor 310 may identify information on tension of skin based on the EDA.

For example, the sensor 330 may include a body temperature sensor. The processor 310 may measure a skin temperature of a part of the body of the user through the body temperature sensor. The processor 310 may obtain a body temperature of the user based on the skin temperature of the part of the body of the user.

For example, the sensor 330 may include a heart rate variability (HRV) sensor. The processor 310 may measure regularity or variability of the heart rate through the HRV sensor. The processor 310 may obtain information on the regularity or the variability of the heart rate through the HRV sensor.

For example, the sensor 330 may include a blood glucose sensor. The processor 310 may identify a blood glucose level of the user by identifying (or measuring) current generated by occurring an electro-chemical reaction with blood glucose in the blood.

According to an embodiment, the wearable device 210 may include the communication circuit 340. For example, the communication circuit 340 may correspond to at least a portion of the communication module 190 of FIG. 1. For example, the communication circuit 340 may include at least one communication circuit. For example, the communication circuit 340 may be configured with at least one communication circuit. For example, the communication circuit 340 may be used for various radio access technologies (RATs). For example, the communication circuit 340 may be used to perform bluetooth communication, wireless local area network (WLAN) communication, or ultra wideband (UWB) communication.

According to an embodiment, the communication circuit 340 may be used to perform cellular communication. The communication circuit 340 may include a universal integrated circuit card (UICC). The processor 310 may perform authentication between the wearable device 210 and a server operated by a communication service provider through a universal subscriber identity module (USIM) installed inside the UICC. For example, the UICC (e.g., a universal subscriber identity module (USIM) or a subscriber identity module (SIM)) may be configured in a form of an independent chip within the wearable device 210. For example, a UICC (e.g., embedded SIM (eSIM)) may be configured in an embedded form in the wearable device 210. According to an embodiment, the wearable device 210 may support a dual SIM function. For example, the processor 310 may establish a call connection with a second external electronic device using a first SIM, and may establish a call connection with a third external electronic device using a second SIM.

According to an embodiment, the wearable device 210 may include GPS circuitry 350. The GPS circuitry 350 may be used to receive a GPS signal. GPS may include at least one of a global navigation satellite system (GLONASS), a Beidou Navigation Satellite System (hereinafter "beidou"), a quasi-zenith satellite system (QZSS), a Indian reginal satellite system (IRNSS), or the European global satellite-based navigation system (Galileo), according to a usage area or bandwidth. The processor 310 may obtain data (or data on a location of the user) on a location of the wearable device 210 using the GPS circuitry 350.

Referring to FIG. 4, a first external electronic device 220 may include at least a portion or all of components included in the wearable device 210. For example, the first external electronic device 220 may include a processor 410, memory 420, a sensor 430, a communication circuit 440, and/or GPS circuitry 450. For example, the processor 410 may correspond to the processor 310 of the wearable device 210. For example, the memory 420 may correspond to the memory 320 of the wearable device 210. For example, the sensor 430 may correspond to the sensor 330 of the wearable device 210. For example, the communication circuit 440 may correspond to the communication circuit 340 of the wearable device 210. For example, the GPS circuitry 450 may correspond to the GPS circuitry 350 of the wearable device 210.

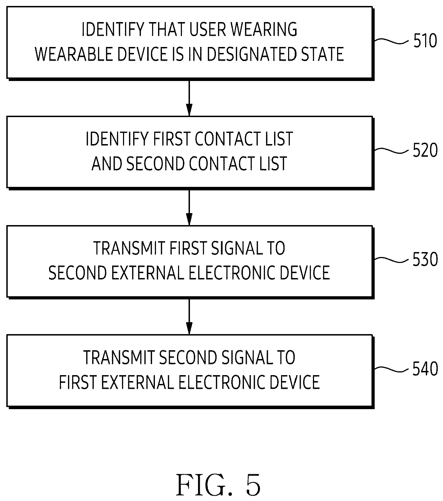

FIG. 5 is a flowchart illustrating an operation of a wearable device according to an embodiment.

Referring to FIG. 5, in an operation 510, a processor 310 may identify that a user wearing a wearable device 210 is in a designated state. For example, the processor 310 may identify, using a sensor 330 (or at least one sensor), that the user wearing the wearable device 210 is in the designated state.

According to an embodiment, the processor 310 may identify, using at least one of an acceleration sensor 331 and a gyroscope sensor 332, that the user wearing the wearable device 210 is in the designated state. For example, the processor 310 may identify, using the at least one of the acceleration sensor 331 and the gyroscope sensor 332, that the user wearing the wearable device 210 is an emergency situation. The processor 310 may identify, based on identifying that the user wearing the wearable device 210 is in the emergency situation, that the user wearing the wearable device 210 is in the designated state.

For example, the processor 310 may collect data on a motion of the user using at least one of the acceleration sensor 331 and the gyroscope sensor 332. The processor 310 may identify that a fall has occurred to the user based on the data on the motion of the user. The processor 310 may check data on a pulse, the motion, and/or a blood flow rate of the user after the fall has occurred in the user. The processor 310 may identify that the user is in the emergency situation if the data on the pulse, the motion, and/or the blood flow rate of the user satisfies a designated condition. For example, the processor 310 may identify that the user is in the emergency situation if the pulse of the user does not exceed a designated number. For example, the processor 310 may identify that the user is in the emergency situation and identify that the user is in the designated state.

According to an embodiment, the processor 310 may identify that the user is in the designated state, based on receiving a user input indicating the emergency situation from the user wearing the wearable device 210.

In an operation 520, the processor 310 may identify a first contact list and a second contact list. For example, the processor 310 may, in response to identifying that the user is in the designated state, identify the first contact list among contacts stored in the memory 320, and identify, using a communication circuit 340 (the at least one communication circuit), the second contact list obtained from a first external electronic device 220 connected to the wearable device 210.

According to an embodiment, the contacts stored in the memory 320 of the wearable device 210 may be distinct from contacts stored in memory 420 of the first external electronic device 220. For example, since the wearable device 210 may operate independently of the first external electronic device 220, the processor 310 may transmit a signal for an outgoing call to another external electronic device (e.g., a second external electronic device) corresponding to one of the contacts stored in the memory 320, regardless of an operation of the first external electronic device 220.

According to an embodiment, the processor 310 may identify the first contact list among the contacts stored in the memory 320. For example, the processor 310 may identify at least one of first information on history of a message reception and a message transmission, second information on history of an incoming call and an outgoing call, and third information on at least one contact set as favorites, stored in the memory 320. The processor 310 may identify fourth information on a first timing at which the user wearing the wearable device 210 is identified as the designated state. The processor 310 may, based on at least one of the first information, the second information, the third information, and the fourth information, identify the first contact list among the contacts stored in the memory 320.

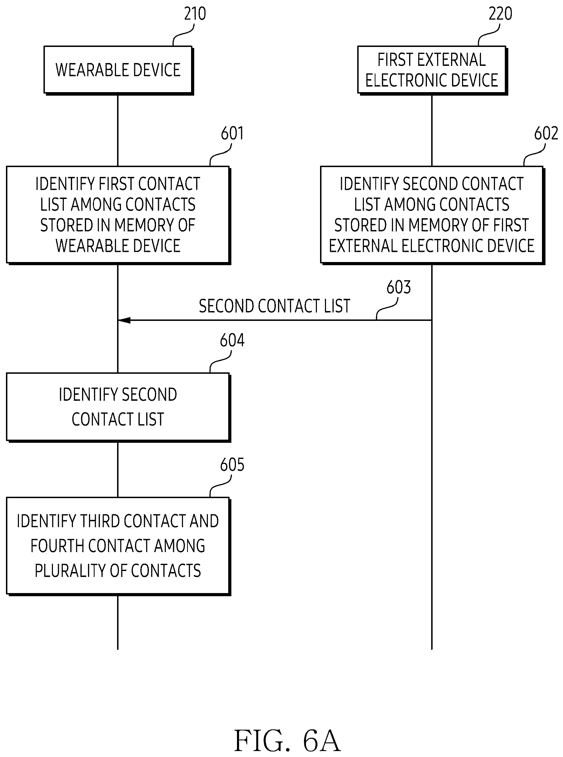

For example, the processor 310 may identify priorities of the contacts stored in the memory 320 based on at least one of the first information, the second information, the third information, and the fourth information. The processor 310 may identify the first contact list based on the priorities of the contacts stored in the memory 320. A specific operation of the processor 310 for identifying the first contact list based on the priorities of the contacts stored in the memory 320 will be described later in FIG. 6A.

According to an embodiment, the processor 310 may identify the second contact list obtained from the first external electronic device 220 connected to the wearable device 210 using the communication circuit 340. For example, the processor 310 may, in response to identifying that the user wearing the wearable device 210 is in the designated state, request the first external electronic device 220 to transmit information on the second contact list and receive the information on the second contact list from the first external electronic device 220.

For example, the second contact list may be identified by the processor 410 of the first external electronic device 220. The processor 410 of the first external electronic device 220 may identify the second contact list among the contacts stored in the memory 420 of the first external electronic device 220 by performing an operation corresponding to the operation of the processor 310 of the wearable device 210. The processor 410 of the first external electronic device 220 may transmit the information on the second contact list to the wearable device 210. The processor 310 of the wearable device 210 may receive the information on the second contact list from the first external electronic device 220.

For example, the processor 410 of the first external electronic device 220 may identify the second contact list based on at least one of information on history of a message reception and a message transmission, information on history an incoming call and an outgoing call, information on at least one contact set as favorites in the first external electronic device 220, and information on the first timing at which the user wearing the wearable device 210 is identified as the designated state, among the contacts stored in the memory 420 of the first external electronic device 220.

For example, the processor 410 of the first external electronic device 220 may identify the second contact list based on priorities of the contacts stored in the first external electronic device 220 (or the memory 420 of the first external electronic device 220), among the contacts stored in the first external electronic device. The second contact list may be identified based on the priorities of the contacts stored in the first external electronic device 220 among the contacts stored in the first external electronic device 220.

In an operation 530, the processor 310 may transmit the first signal to the second external electronic device. For example, the processor 310 may transmit, to the second external electronic device, the first signal for an outgoing call to the second external electronic device corresponding to a third contact among a plurality of contacts included in the first contact list and the second contact list, using the communication circuit 340.

According to an embodiment, the processor 310 may identify the third contact among the plurality of contacts included in the first contact list and the second contact list. For example, the processor 310 may identify values representing priorities of the plurality of contacts included in the first contact list and the second contact list, respectively. The processor 310 may identify, based on the values representing the priorities of the plurality of contacts respectively, the third contact and a fourth contact.

According to an embodiment, the processor 310 may transmit the first signal for the outgoing call to the second external electronic device corresponding to the third contact, to the second external electronic device. The processor 310 may attempt a call connection to a user corresponding to the third contact. The processor 310 may attempt the call connection to the user corresponding to the third contact in order to notify that the user of the wearable device 210 is in the designated state. For example, the processor 310 may attempt the call connection to the user corresponding to the third contact in order to notify that the user of the wearable device 210 is in the emergency situation.

In an operation 540, the processor 310 may transmit a second signal to the first external electronic device 220. For example, the processor 310 may transmit, using the communication circuit 340, the second signal causing the first external electronic device 220 to transmit a third signal for an outgoing call to a third external electronic device corresponding to the fourth contact among the plurality of contacts included in the first contact list and the second contact list to the first external electronic device 220.

According to an embodiment, the processor 310 may transmit the second signal to the first external electronic device 220 in order to control the first external electronic device 220 to attempt the call connection to a user corresponding to the fourth contact. The processor 410 of the first external electronic device 220 may attempt the call connection to the user corresponding to the fourth contact in order to notify that the user of the wearable device 210 is in the designated state based on the second signal. For example, the processor 410 of the first external electronic device 220 may attempt the call connection to the user corresponding to the fourth contact in order to notify that the user of the wearable device 210 is in the emergency situation.

According to an embodiment, the wearable device 210 may support a dual SIM function. For example, the communication circuit 340 may include a first SIM and a second SIM. The processor 310 may further identify a fifth contact among the plurality of contacts. The processor 310 may transmit the first signal for the outgoing call to the second external electronic device corresponding to the third contact, to the second external electronic device using the first SIM. The processor 310 may transmit a sixth signal for an outgoing call to a fourth external electronic device corresponding to the fifth contact to the fourth external electronic device using the second SIM.

FIG. 6A illustrates an example of an operation of a wearable device and a first external electronic device according to an embodiment.

Referring to FIG. 6A, in an operation 601, a processor 310 of a wearable device 210 may identify a first contact list among contacts stored in memory 320 of the wearable device 210.

According to an embodiment, the processor 310 may receive a user input for activating an emergency contact function (or a safety function) from the user of the wearable device 210. The processor 310 may identify the first contact list among the contacts stored in the memory 320 of the wearable device 210 in a state that the emergency contact function is activated. According to an embodiment, the processor 310 may identify contacts set as an emergency contact among the contacts stored in the memory 320. The processor 310 may identify the first contact list among the contacts set as the emergency contact.

According to an embodiment, the processor 310 may identify first information to fourth information. For example, the processor 310 may identify the first information on history of a message reception and a message transmission stored in memory 320. For example, the processor 310 may identify second information on history of an incoming call and an outgoing call stored in the memory 320. For example, the processor 310 may identify third information on at least one contact set as favorites, stored in the memory 320. For example, the processor 310 may identify the fourth information on a first timing at which the user wearing the wearable device 210 is identified as the designated state. The processor 310 may identify the first contact list among the contacts stored in the memory 320, based on at least one of the first information to the fourth information.

For example, the processor 310 may identify a first value to a fifth value for a target contact among the contacts stored in the memory 320, based on the first information to the fourth information. The processor 310 may identify the first value to the fifth value for the contacts stored in the memory 320 respectively. The processor 310 may identify values representing priorities of the contacts stored in the memory 320 respectively, based on the first value to the fifth value. The processor 310 may identify the first contact list among the contacts stored in the memory 320, based on values representing the priorities of the contacts stored in the memory 320 respectively.

For example, the first value may indicate whether the target contact among the contacts stored in the memory 320 is set as the favorites. A second value may indicate the number of messages exchanged with the target contact within a first time interval related to the first timing at which the user wearing the wearable device 210 is identified as the designated state. A third value may indicate that the number of messages exchanged with the target contact within a second time interval distinct from the first time interval. A fourth value may indicate a sum of time spent on call with the target contact within the first time interval. The fifth value may indicate a sum of time spent on call with the target contact within the second time interval.

According to an embodiment, the processor 310 may obtain, based on the first value to the fifth value, a first calibration value to a fifth calibration value. The processor 310 may identify, based on the first calibration value to the fifth calibration value, the values representing the priorities of the contacts stored in the memory 320 respectively.

For example, the processor 310 may obtain the first calibration value by applying a first weight to the first value. The processor 310 may obtain a second calibration value by applying a second weight to the second value. The processor 310 may obtain a third calibration value by applying a third weight to the third value. The processor 310 may obtain a fourth calibration value by applying a fourth weight to the fourth value. The processor 310 may obtain a fifth calibration value by applying a fifth weight to the fifth value. The processor 310 may identify a sum of the first calibration value to the fifth calibration value as a value representing the priorities of the target contact.

Hereinafter, a specific example of an operation of the processor 310 for identifying the first contact list among the contacts stored in the memory 320 may be described.

According to an embodiment, the processor 310 may sort the contacts stored in the memory 320, based on the first information to the fourth information. For example, the processor 310 may sort the contacts stored in the memory 320, based on whether the contacts stored in the memory 320 are set as the favorites. For example, the processor 310 may sort the contacts stored in the memory 320, based on at least one of the number of incoming calls, the number of outgoing calls, call duration, and a call start time. For example, the processor 310 may sort the contacts stored in the memory 320, based on call start time.

According to an embodiment, the processor 310 may configure the contacts stored in the memory 320 as illustrated in Table 1.

[Table 1]

| Contact | Whether to set as the favorites | History of a message reception and a message transmission | History of an incoming call and an outgoing call |
|---|---|---|---|
| A | O | 1. Message (time : 06:00)<br>2. Message (time : 10:00)<br>3. Message (time : 20:10)<br>4. Message (time : 20:15) | 1. Call (time : 12:05 ~ 12:08)<br>2. Call (time : 07:00 ~ 08:00)<br>3. Call (time : 08:25 ~ 08:30)<br>4. Call (time : 20:08 ~ 20:28) |
| B | X | 1. Message (time : 07:00)<br>2. Message (time : 20:05)<br>3. Message (time : 20:06)<br>4. Message (time : 20:07)<br>5. Message (time : 20:08) | 1. Call (time : 12:10 ~ 12:15)<br>2. Call (time : 08:00 ~ 09:00)<br>3. Call (time : 23:25 ~ 23:30) |
| C | O | 1. Message (time : 11:05)<br>2. Message (time : 12:05)<br>3. Message (time : 19:05) | 1. Call (time : 11:05 ~ 11:08)<br>2. Call (time : 09:00 ~ 10:00)<br>3. Call (time : 20:00 ~ 21:00) |

Referring to the Table 1, a contact A, a contact B, and a contact C may be an example of contacts stored in the memory 320. The processor 310 may identify whether the target contact (e.g., the contact A, the contact B, and the contact C) is set as the favorites, history of a message reception and a message transmission for the target contact, and history an incoming call and an outgoing call for the target contact. The processor 310 may identify a value indicating the priorities of the target contact. For example, the processor 310 may identify a value indicating priorities of the contact A. The processor 310 may identify a value indicating priorities of the contact B. The processor 310 may identify a value indicating priorities of the contact C.

The processor 310 may identify a value indicating priorities of the target contact according to equation 1. The equation 1 may be set as follows.

【 Equation 1 】

$$P = A1 \times W1 + A2 \times W2 + A3 \times W3 + A4 \times W4 + A5 \times W5$$

Referring to the equation 1, P is a value indicating the priorities of the target contact. A1 is the first value representing whether the target contact is set as favorites. The A1 may be set as a designated value (e.g., 1) in case that the target contact is set as the favorites. The A1 may be set as another designated value (e.g., 0) in case that the target contact is not set as the favorites. A2 is the second value representing the number of messages exchanged with the target contact within the first time interval related to the first timing at which the user is identified as the designated state. A3 is the third value representing the number of messages exchanged with the target contact within the second time interval distinct from the first time interval. A4 is the fourth value representing a sum (unit: minute) of the time spent on call with the target contact within the first time interval. A5 is the fifth value representing a sum (unit: minute) of the time spent on call with the target contact within the second time interval. W1 is the first weight. W2 is the second weight. W3 is the third weight. W4 is the fourth weight. W5 is the fifth weight.

The first time interval may be related to the first timing at which the user is identified as the designated state. The first time interval may be set as a time interval corresponding to the first timing on another day (or at least another day) different from a day on which the user is identified as the designated state. The second time interval may be set as a time interval distinct from the first time interval on another day (or at least another day) different from the day on which the user is identified as the designated state.

The processor 310 may obtain the first calibration value by applying the first weight to the first value. The processor 310 may obtain the second calibration value by applying the second weight to the second value. The processor 310 may obtain the third calibration value by applying the third weight to the third value. The processor 310 may obtain the fourth calibration value by applying the fourth weight to the fourth value. The processor 310 may obtain the fifth calibration value by applying the fifth weight to the fifth value. The processor 310 may identify the sum of the first calibration value to the fifth calibration value as the priorities of the target contact.

According to an embodiment, the first weight to the fifth weight may be variously set. For example, the second weight may be set higher than the third weight. For example, the fourth weight may be set higher than the fifth weight. For example, the fourth weight may be set higher than the second weight.

Referring back to the Table 1, the processor 310 may identify that the user is in the designated state at 8 p.m. For example, the processor 310 may set the first value (or the A1) to the fifth value (or the A5) to identify a value indicating the priorities of the contact A. The processor 310 may set the first value to 1. The processor 310 may set the second value to 2. The processor 310 may set the third value to 2. The processor 310 may set the fourth value to 20. The processor 310 may set the fifth value to 67. For example, the processor 310 may set the first value (or the A1) to the fifth value (or the A5) to identify a value indicating the priorities of the contact B. The processor 310 may set the first value to 0. The processor 310 may set the second value to 4. The processor 310 may set the third value to 1. The processor 310 may set the fourth value to 0. The processor 310 may set the fifth value to 70. For example, the processor 310 may set the first value (or the A1) to the fifth value (or the A5) to identify a value indicating the priorities of the contact C. The processor 310 may set the first value to 1. The processor 310 may set the second value to 0. The processor 310 may set the third value to 3. The processor 310 may set the fourth value to 60. The processor 310 may set the fifth value to 63.

The processor 310 may identify a value representing the priorities of the contact A to the contact C respectively, and may sort according to the value representing the priorities. In case that the value indicating the priorities of the contact A is the largest, the contact A may be identified as one (or the emergency contact) of the first contact list.

Referring back to FIG. 6A, in an operation 602, a processor 410 of a first external electronic device 220 may identify a second contact list among contacts stored in memory 420 of the first external electronic device 220. The operation 602 may correspond to the operation 601. The processor 410 of the first external electronic device 220 may identify the second contact list among the contacts stored in the memory 420 of the first external electronic device 220, by performing the same or the similar operation as the operation 601.

In an operation 603, the processor 310 of the wearable device 210 may receive information on the second contact list from the first external electronic device 220. The processor 410 of the first external electronic device 220 may transmit the information on the second contact list.

In an operation 604, the processor 310 of the wearable device 210 may identify (or obtain) the second contact list by receiving the information on the second contact list received from the first external electronic device 220. Although the operation 604 is illustrated to be performed after the operation 601 is performed, the processor 310 may receive the information on the second contact list from the first external electronic device 220 and may identify the second contact list before identifying the first contact list.

In an operation 605, the processor 310 may identify a third contact and a fourth contact among a plurality of contacts. For example, the processor 310 may identify the plurality of contacts included in the first contact list and the second contact list. For example, the processor 310 may identify integrated emergency contacts through the emergency contact of the wearable device 210 and an emergency contact of the first external electronic device 220 by identifying the plurality of contacts.

According to an embodiment, the processor 310 may identify values representing priorities of a plurality of contacts respectively. The processor 310 may sort the plurality of contacts according to an order in which values representing priorities of the plurality of contacts are large, respectively. The processor 310 may identify top two contacts (or the third contact and the fourth contact) based on values representing the priorities of the plurality of contacts respectively.

According to an embodiment, the processor 310 of the wearable device 210 may identify the two contacts (or the third contact and the fourth contact) based on a time when a recent call was made among the plurality of contacts.

Although not illustrated, the processor 310 may transmit, using a communication circuit 340, a first signal for an outgoing call to a second external electronic device corresponding to the third contact, to the second external electronic device. The processor 310 may transmit, using the communication circuit 340, a second signal causing the first external electronic device 220 to transmit a third signal for an outgoing call to a third external electronic device corresponding to a fourth contact, to the first external electronic device 220.

For example, the processor 310 may identify two contacts among the contacts stored in the memory 320. The processor 410 of the first external electronic device 220 may identify four contacts among the contacts stored in the memory 420 of the first external electronic device 220. The processor 410 of the first external electronic device 220 may transmit information on the four contacts to the wearable device 210. The processor 310 of the wearable device 210 may identify six contacts as integrated emergency contacts. The processor 310 may identify two contacts among the six contacts.

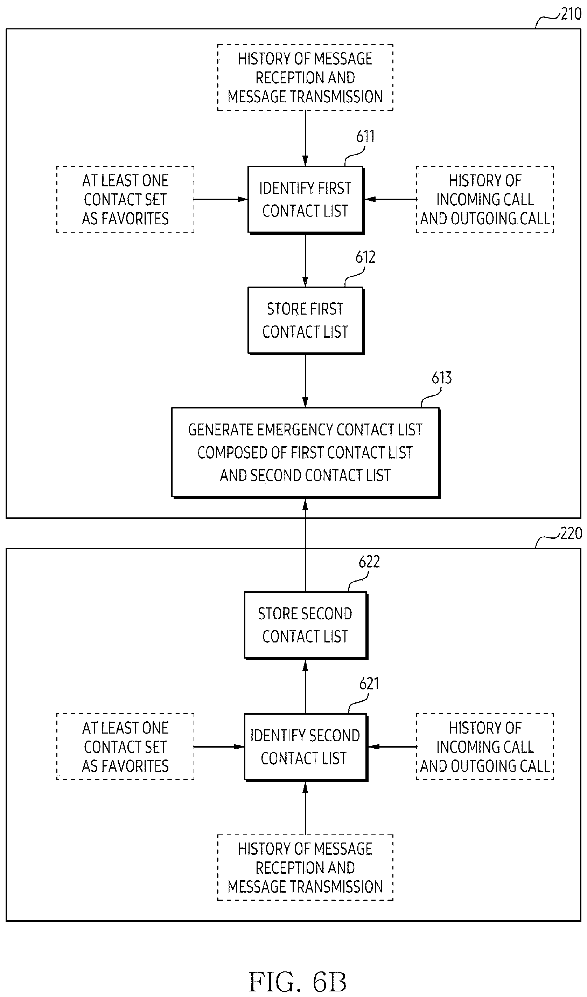

FIG. 6B illustrates an example of an operation of a wearable device and a first external electronic device according to an embodiment.

Referring to FIG. 6B, in an operation 611, the processor 310 of the wearable device 210 may identify the first contact list to be used as the emergency contact among the contacts stored in the memory 320 of the wearable device 210.

According to an embodiment, the processor 310 may identify the information on the history of the message reception and the message transmission stored in the memory 320. The processor 310 may identify the information on the history of the incoming call and the outgoing call stored in the memory 320. The processor 310 may identify the information on the at least one contact set as the favorites, stored in the memory 320.

The processor 310 may identify the first contact list based on at least one of the information on the history of the message reception and the message transmission, the information on the history of the incoming call and the outgoing call, and the information on the at least one contact set as the favorites.

The processor 310 may identify the first contact list based on user selection among the information on the at least one contact.

In an operation 612, the processor 310 of the wearable device 210 may store the identified first contact list in the memory 320. For example, the processor 310 may identify the first contact list set as the emergency contact among the contacts stored in the memory 320 and store the identified first contact list.

In an operation 621, the processor 410 of the first external electronic device 220 may identify the second contact list to be used as the emergency contact among the contacts stored in the memory 420 of the first external electronic device 220.

According to an embodiment, the processor 410 may identify information on history of a message reception and a message transmission stored in the memory 420. The processor 410 may identify information on history of an incoming call and an outgoing call stored in the memory 420. The processor 410 may identify information on at least one contact set as favorites stored in the memory 420.

The processor 410 may identify the second contact list based on at least one of information on history of the message reception and the message transmission history, information on history of the incoming call and the outgoing call, and information on the at least one contact set as favorites.

The processor 410 may identify the second contact list based on user selection among the information on the at least one contact.

In an operation 622, the processor 410 of the first external electronic device 220 may store the identified second contact list in the memory 420. For example, the processor 410 may identify the second contact list set as the emergency contact among the contacts stored in the memory 420 and may store the identified second contact list.

In an operation 613, the processor 310 of the wearable device 210 may generate an emergency contact list composed of the first contact list and the second contact list. For example, the processor 310 of the wearable device 210 may receive the information on the second contact list from the first external electronic device 220. The processor 410 of the first external electronic device 220 may transmit the information on the second contact list. The processor 310 of the wearable device 210 may identify (or obtain) the second contact list by receiving the information on the second contact list received from the first external electronic device 220. The processor 310 may generate the emergency contact list included in the first contact list and the second contact list.

According to an embodiment, the processor 310 may identify the top two contacts based on values indicating the priorities of the plurality of contacts included in the emergency contact list, respectively. For example, the processor 310 may identify, based on the values representing the priorities of the plurality of contacts respectively, the third contact and the fourth contact.

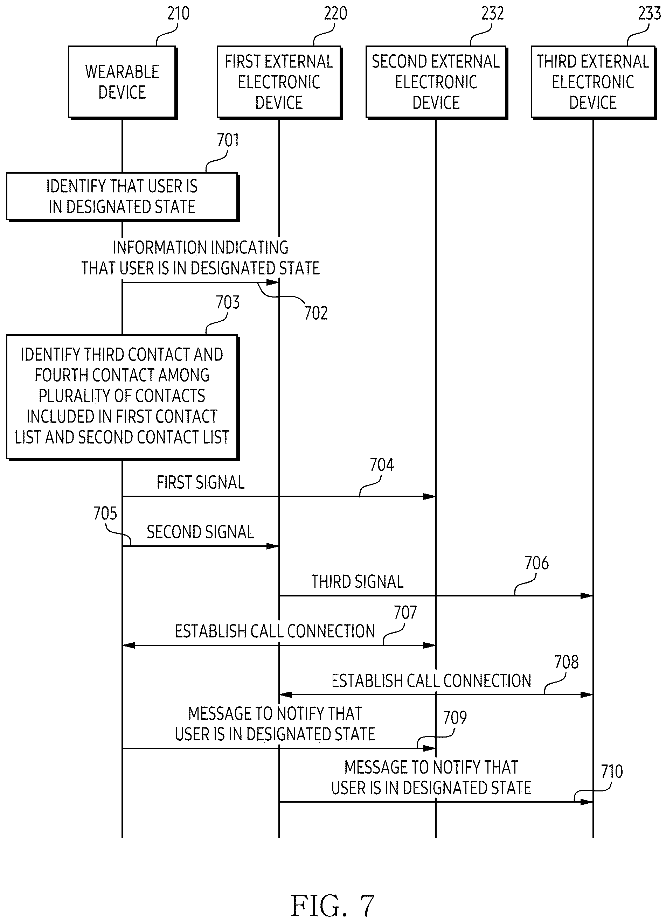

FIG. 7 illustrates an example of an operation of a wearable device and a first external electronic device according to an embodiment.

Referring to FIG. 7, in an operation 701, a processor 310 may identify that a user is in a designated state. The operation 701 may correspond to the operation 510 of FIG. 5.

In an operation 702, the processor 310 may transmit information indicating that the user is in the designated state to a first external electronic device 220. A processor 410 of the first external electronic device 220 may receive the information indicating that the user is the designated state from the wearable device 210. According to an embodiment, the processor 310 may identify a location of the user using GPS circuitry 350. The information indicating that the user is in the designated state may include information on the location of the user. For example, the processor 310 may transmit information to notify that the user of the wearable device 210 is in an emergency state and information on a current location of the user to the first external electronic device 220.

In the operation 701 and the operation 702, the processor 310 of the wearable device 210 identifies that the user is in the designated state and transmits the information indicating that the user is in the designated state to the first external electronic device 220, but it is not limited thereto. In case that the processor 410 of the first external electronic device 220 identifies that the user is in the designated state, the processor 410 of the first external electronic device 220 may transmit the information indicating that the user is in the designated state to the wearable device 210.

In an operation 703, the processor 310 may identify a third contact and a fourth contact among a plurality of contacts included in a first contact list and a second contact list. The operation 703 may correspond to the operation 601 to the operation 605 of FIG. 6A.

In an operation 704, the processor 310 may transmit a first signal to a second external electronic device 232. For example, the processor 310 may transmit the first signal for an outgoing call to the second external electronic device corresponding to a third contact, to the second external electronic device.

In an operation 705, the processor 310 may transmit a second signal to the first external electronic device 220. For example, the processor 310 may transmit the second signal causing the first external electronic device 220 to transmit a third signal for an outgoing call to a third external electronic device 233 corresponding to the fourth contact, to the first external electronic device 220. The processor 410 of the first external electronic device 220 may receive the second signal from the wearable device 210.

In an operation 706, the processor 410 of the first external electronic device 220 may transmit the third signal to the third external electronic device 233. For example, the processor 410 of the first external electronic device 220 may transmit the third signal for an outgoing call to the third external electronic device 233 corresponding to the fourth contact to the third external electronic device 233 based on the second signal. The third external electronic device 233 may receive the third signal from the first external electronic device 220.

Although FIG. 7 illustrates that the second signal is transmitted after the first signal is transmitted, it is not limited thereto. For example, the first signal and the second signal may be transmitted simultaneously. For example, the first signal may be transmitted after the second signal is transmitted.

In an operation 707, the processor 310 may establish a call connection with the second external electronic device 232. The processor 310 may establish the call connection with the second external electronic device 232 based on the first signal. For example, the call connection being established with the second external electronic device 232 may mean a state that the user of the wearable device 210 may make a call with a user of the second external electronic device 232.

In an operation 708, the processor 410 of the first external electronic device 220 may establish a call connection with the third external electronic device 233. The processor 410 of the first external electronic device 220 may establish the call connection with the third external electronic device 233 based on the third signal. For example, the call connection being established with the third external electronic device 233 may mean a state that the user of the first external electronic device 220 (or the user of the wearable device 210) may make a call with a user of the third external electronic device 233.

FIG. 7 illustrates that a call connection between the first external electronic device 220 and the third external electronic device 233 is established after a call connection between the wearable device 210 and the second external electronic device 232 is established, but it is not limited thereto. The call connection between the wearable device 210 and the second external electronic device 232, and the call connection between the first external electronic device 220 and the third external electronic device 233 may be independently established.

In an operation 709, the processor 310 may, in response to establishing the call connection with the second external electronic device 232, transmit a message to notify that the user is in the designated state to the second external electronic device 232. The processor 310 may establish the call connection and additionally transmit a message to notify that the user is in the designated state. For example, the processor 310 may transmit information indicating a location of the user together through the message.

In an operation 710, the processor 410 of the first external electronic device 220 may, in response to establishing the call connection with the third external electronic device 233, transmit a message to notify that the user is in the designated state to the third external electronic device 233. The processor 310 may establish a call connection and additionally transmit a message to notify that the user is in the designated state. For example, the processor 410 of the first external electronic device 220 may transmit information indicating a location of the user together through the message.

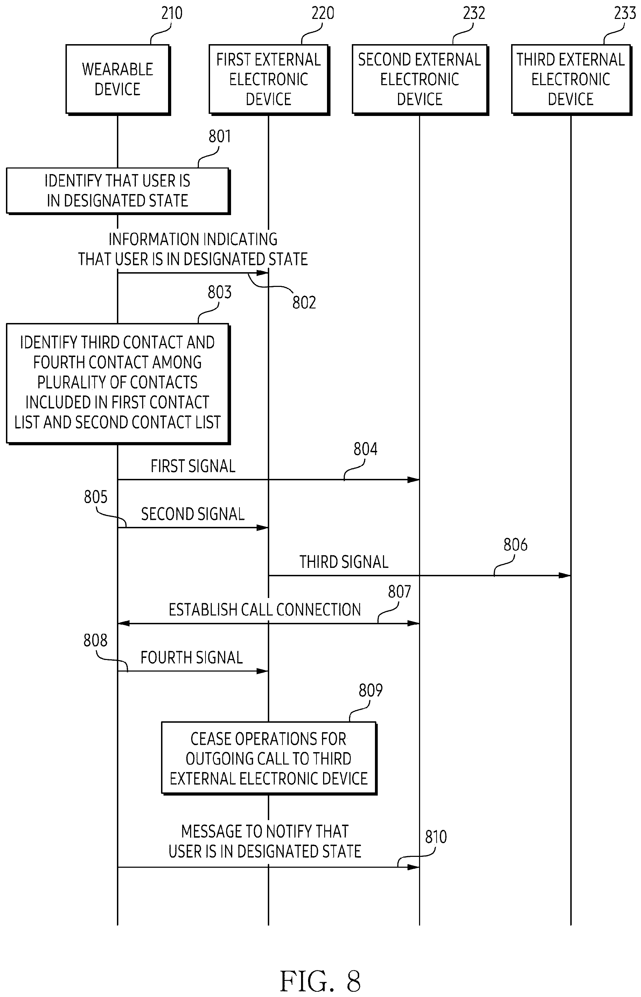

FIG. 8 illustrates an example of an operation of a wearable device and a first external electronic device according to an embodiment.

Referring to FIG. 8, an operation 801 to an operation 807 may correspond to the operation 701 to the operation 707 of FIG. 7.

In an operation 808, the processor 310 may transmit a fourth signal to a first external electronic device 220. The first external electronic device 220 may receive the fourth signal from a wearable device 210.

For example, the processor 310 may, in response to identifying that a call connection with a second external electronic device 232 corresponding to a third contact is established, transmit, to the first external electronic device 220, the fourth signal causing the first external electronic device 220 to cease operations for an outgoing call to a third external electronic device 233.

For example, the processor 310 may transmit the fourth signal to the first external electronic device 220 after identifying that the call connection with the second external electronic device 232 corresponding to the third contact is established, in order to establish only one call connection.

In an operation 809, a processor 410 of the first external electronic device 220 may cease the operations for the outgoing call to the third external electronic device 233. For example, the processor 410 of the first external electronic device 220 may cease the operations for the outgoing call to the third external electronic device 233 based on the fourth signal. Although not illustrated, according to an embodiment, the processor 410 of the first external electronic device 220 may cease the operations for the outgoing call to the third external electronic device 233, and transmit a message to notify that a user is in a designated state to the third external electronic device 233.

In an operation 810, the processor 310 may transmit the message to notify that the user is in the designated state to the second external electronic device 232. The operation 810 may correspond to the operation 709 of FIG. 7.

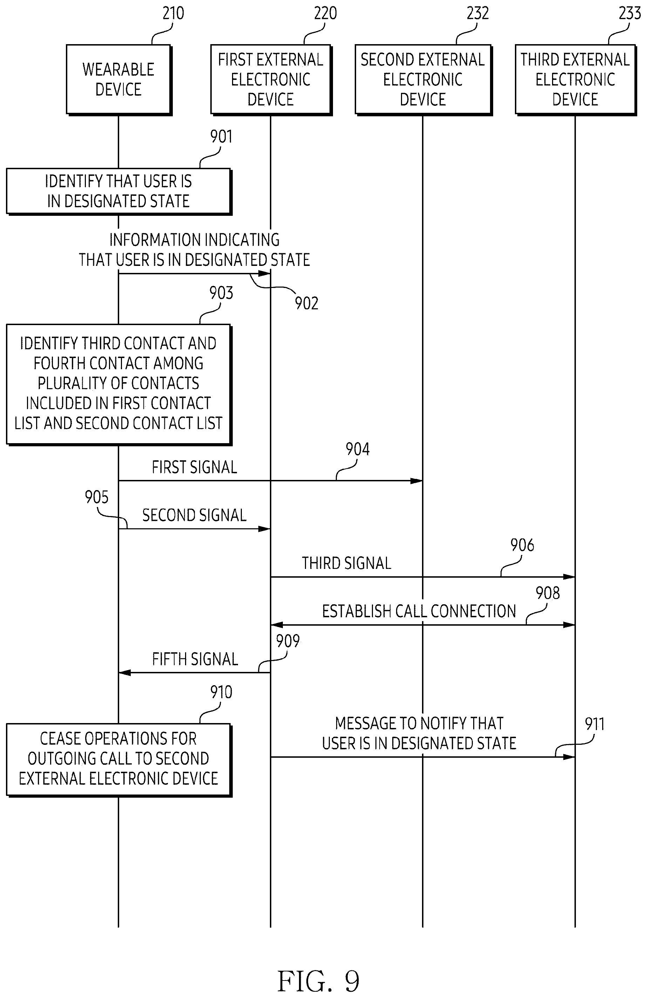

FIG. 9 illustrates an example of an operation of a wearable device and a first external electronic device according to an embodiment.

Referring to FIG. 9, an embodiment in which a call connection between a wearable device 210 and a second external electronic device 232 was established before a call connection between a first external electronic device 220 and a third external electronic device 233 was illustrated in FIG. 8, but an embodiment in which the call connection between the first external electronic device 220 and the third external electronic device 233 was established before the call connection between the wearable device 210 and the second external electronic device 232 may be illustrated in FIG. 9.

An operation 901 to an operation 906 may correspond to the operation 701 to the operation 706 of FIG. 7.

In an operation 908, a processor 410 of the first external electronic device 220 may establish a call connection with the third external electronic device 233.

In an operation 909, the processor 410 of the first external electronic device 220 may transmit a fifth signal to the wearable device 210. A processor 310 of the wearable device 210 may receive the fifth signal from the first external electronic device 220. For example, the processor 410 of the first external electronic device 220 may transmit the fifth signal, indicating that the call connection between the first external electronic device 220 and the third external electronic device 233 is established, to the wearable device 210. The processor 310 of the wearable device 210 may receive, from the first external electronic device 220, the fifth signal indicating that the call connection between the first external electronic device and the third external electronic device 233 is established.

In an operation 910, the processor 310 may cease operations for an outgoing call to the second external electronic device 232. For example, the processor 310 may, in response to the fifth signal, cease the operations for the outgoing call to the second external electronic device 232. Although not illustrated, according to an embodiment, the processor 310 may cease the operations for the outgoing call to the second external electronic device 232, and transmit a message to notify that the user is in the designated state to the second external electronic device 232.

In an operation 911, the processor 410 of the first external electronic device 220 may transmit the message to notify that the user is in the designated state to the third external electronic device 233. The operation 911 may correspond to the operation 710 of FIG. 7.

Referring to FIGS. 8 and 9, the processor 310 may identify a first timing at which the call connection with the second external electronic device 232 is established and a second timing at which the call connection between the first external electronic device 220 and the third external electronic device 233 is established. The processor 310 may, based on identifying that the first timing is earlier than the second timing, transmit, to the first external electronic device 220, a fourth signal causing the first external electronic device 220 to cease operations for an outgoing call to the third external electronic device 233. The processor 310 may cease, based on identifying that the first timing is later than the second timing, the operations for the outgoing call to the second external electronic device 232.

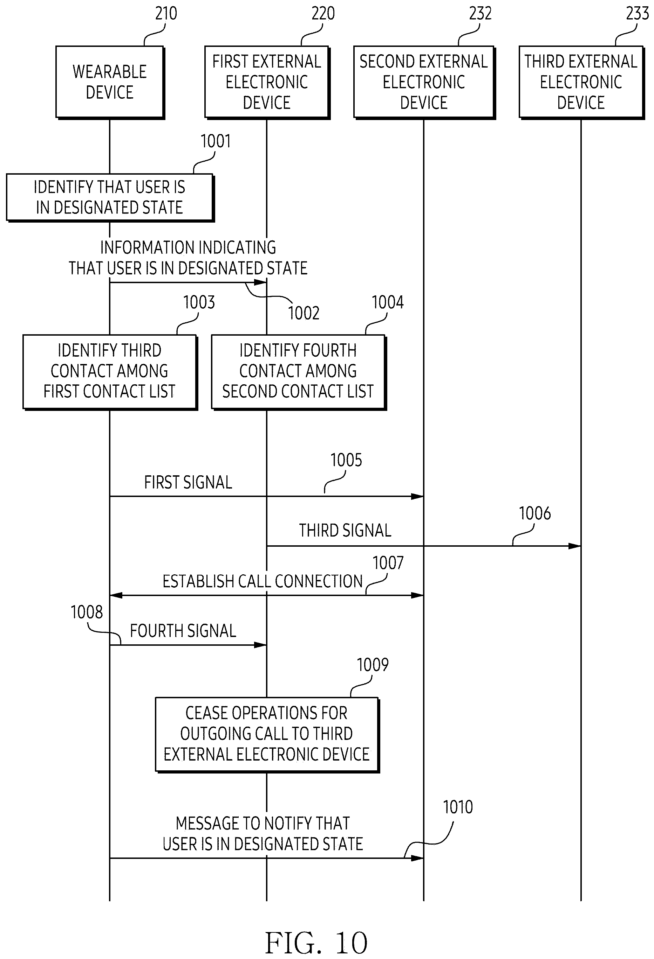

FIG. 10 illustrates an example of an operation of a wearable device and a first external electronic device according to an embodiment.

Referring to FIG. 10, an operation 1001 and an operation 1002 may correspond to the operation 701 and the operation 702 of FIG. 7.

In an operation 1003, a processor 310 may identify a third contact among a first contact list. For example, the processor 310 may identify the first contact list among contacts stored in memory 320, and identify the third contact among the first contact list. According to an embodiment, the processor 310 may identify the third contact among the contacts stored in the memory 320.

In an operation 1004, a processor 410 of a first external electronic device 220 may identify a fourth contact among a second contact list. For example, the processor 410 may identify the second contact list among contacts stored in memory 420, and identify the fourth contact among the second contact list. According to an embodiment, the processor 410 may identify the fourth contact among the contacts stored in the memory 420.

In an operation 1005, the processor 310 may transmit a first signal to a second external electronic device 232. The operation 1005 may correspond to the operation 704 of FIG. 7.

In an operation 1006, the processor 410 of the first external electronic device 220 may transmit a third signal to a third external electronic device 233. Unlike the operation 806 of FIG. 8, the processor 410 may transmit the third signal to the third external electronic device 233 without receiving a second signal. For example, the processor 410 may transmit the third signal for an outgoing call to the third external electronic device 233 corresponding to the fourth contact, to the third external electronic device 233.

In the operation 1001 to the operation 1006, the wearable device 210 (or the processor 310 of the wearable device 210) and the first external electronic device 220 (or the processor 410 of the first external electronic device 220) may identify the third contact and the fourth contact in response to identifying that a user is in a designated state, respectively. For example, the processor 310 may identify the third contact without identifying a plurality of contacts that are integrated emergency contact. The processor 410 of the first external electronic device 220 may identify the fourth contact without transmitting information on the second contact list to the wearable device 210. The processor 310 of the wearable device 210 may transmit the first signal for an outgoing call to the second external electronic device 232 corresponding to the third contact, to the second external electronic device 232. The processor 410 of the first external electronic device 220 may transmit the third signal for the outgoing call to the third external electronic device 233 corresponding to the fourth contact to the third external electronic device 233.

In an operation 1007, the processor 310 may establish a call connection with the second external electronic device 232. The operation 1007 may correspond to the operation 707 of FIG. 7.

An operation 1008 to an operation 1010 may correspond to the operation 808 to the operation 810 of FIG. 8.

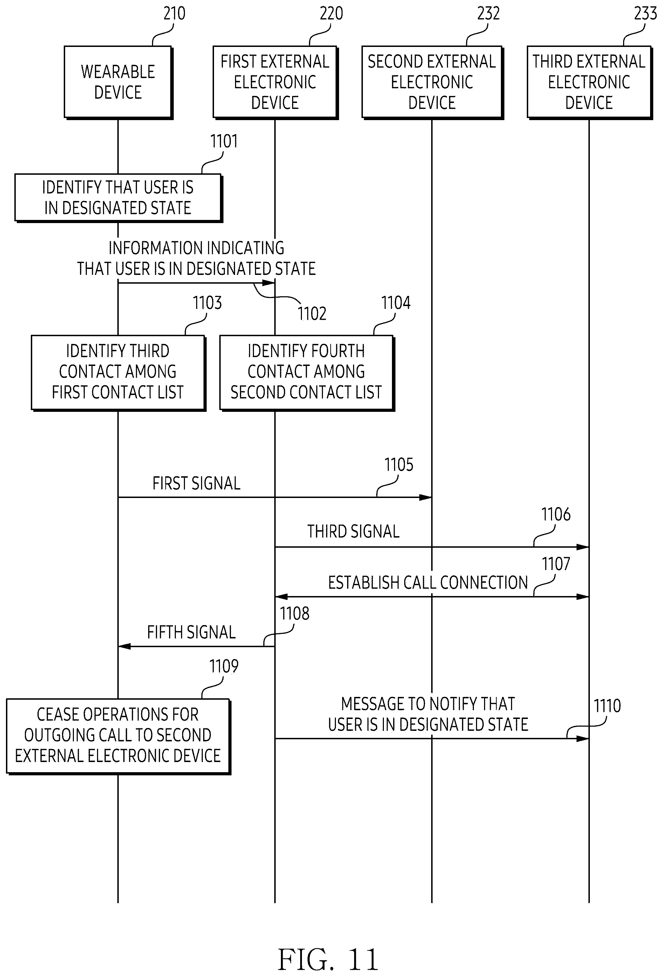

FIG. 11 illustrates an example of an operation of a wearable device and a first external electronic device according to an embodiment.

Referring to FIG. 11, an operation 1101 to an operation 1106 may correspond to the operation 1001 to the operation 1006 of FIG. 10.

In an operation 1107, a processor 410 of a first external electronic device 220 may establish a call connection with a third external electronic device 233. The operation 1107 may correspond to the operation 708 of FIG. 7.

An operation 1108 to an operation 1110 may correspond to the operation 809 to the operation 911 of FIG. 9.

Referring to FIGS. 10 and 11, the processor 310 may identify a first timing at which a call connection with a second external electronic device 232 is established, and a second timing at which a call connection between the first external electronic device 220 and the third external electronic device 233 is established. The processor 310 may, based on identifying that the first timing is earlier than the second timing, transmit, to the first external electronic device 220, a fourth signal causing the first external electronic device 220 to cease operations for an outgoing call to the third external electronic device 233. The processor 310 may cease, based on identifying that the first timing is later than the second timing, operations for an outgoing call to the second external electronic device 232.

In FIGS. 10 and 11, an embodiment in which only one of a call connection between the wearable device 210 and the second external electronic device 232, and the call connection between the first external electronic device 220 and the third external electronic device 233 are maintained is illustrated, but it is not limited thereto. According to an embodiment, both the call connection between the wearable device 210 and the second external electronic device 232 and the call connection between the first external electronic device 220 and the third external electronic device 233 may be established.

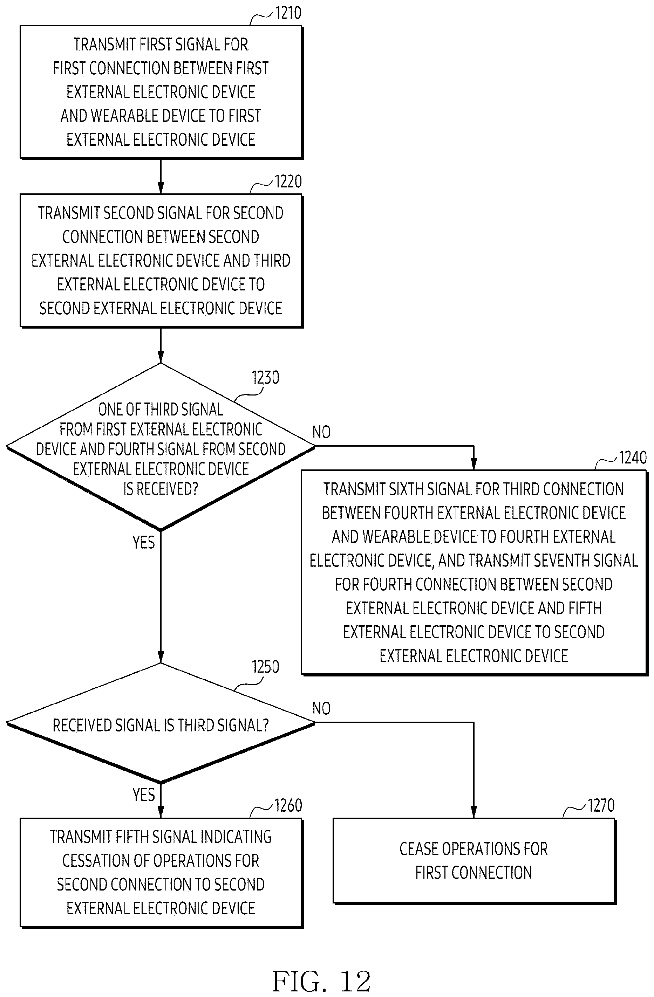

FIG. 12 is a flowchart illustrating an operation of a wearable device according to an embodiment.

Referring to FIG. 12, in an operation 1210, a processor 310 may transmit a first signal for a first connection between a first external electronic device (e.g., the second external electronic device 232 of FIG. 7) and a wearable device 210 to the first external electronic device. For example, the processor 310 may transmit the first signal for the first connection between the first external electronic device and the wearable device 210, to the first external electronic device, using a communication circuit 340 (or at least one communication circuit), in response to a designated state of a user wearing the wearable device 210 identified using a sensor 330 (or at least one sensor).

According to an embodiment, the processor 310 may identify one of contacts stored in memory 320 in response to the designated state of the user wearing the wearable device 210. The processor 310 may transmit the first signal for the first connection between the first external electronic device and the wearable device 210 corresponding to one of the contacts stored in the memory 320 to the first external electronic device.

In an operation 1220, the processor 310 may transmit a second signal for a second connection between a second external electronic device (e.g., the first external electronic device 220 of FIG. 7) and a third external electronic device (e.g., the third external electronic device 233 of FIG. 7) to the second external electronic device. For example, the processor 310 may transmit, using the communication circuit 340 (or at least one communication circuit), the second signal for the second connection between the second external electronic device and the third external electronic device to the second external electronic device, in response to the designated state of the user wearing the wearable device 210 using the sensor 330 (or at least one sensor).

For example, the second signal may cause the second external electronic device to establish the second connection with the third external electronic device. The second external electronic device may receive the second signal and transmit a signal for the second connection to the third external electronic device based on the second signal.

In an operation 1230, the processor 310 may identify whether one of a third signal from the first external electronic device and a fourth signal from the second external electronic device is received. For example, the processor 310 may identify, in response to a transmission of the first signal and a transmission of the second signal, whether the third signal from the first external electronic device, indicating establishment of the first connection, and the fourth signal from the second external electronic device, indicating establishment of the second connection is received. For example, the third signal may indicate the establishment of the first connection. For example, the fourth signal may indicate the establishment of the second connection.

In an operation 1240, in case that one of the third signal and the fourth signal is not received, the processor 310 may transmit a sixth signal for a third connection between a fourth external electronic device and the wearable device 210, to the fourth external electronic device, and transmit a seventh signal for a fourth connection between the second external electronic device and a fifth external electronic device, to the second external electronic device. Based on identifying that one of the third signal and the fourth signal is not received, the processor 310 may transmit the sixth signal for the third connection between the fourth external electronic device and the wearable device 210, to the fourth external electronic device, and transmit the seventh signal for the fourth connection between the second external electronic device and the fifth external electronic device, to the second external electronic device.

According to an embodiment, based on identifying that the first connection and the second connection are not established, the processor 310 may transmit a fifth signal to the fourth external electronic device, and transmit the sixth signal to the second external electronic device, for the third connection and the fourth connection.

In an operation 1250, in case that one of the third signal and the fourth signal is received, the processor 310 may identify whether the received signal is the third signal. For example, based on receiving one of the third signal and the fourth signal, the processor 310 may identify whether the received signal is the third signal. For example, the processor 310 may identify a signal received first from among the third signal and the fourth signal. The processor 310 may identify whether the first received signal is the third signal transmitted from the first external electronic device.

In an operation 1260, in case that the received signal is the third signal, the processor 310 may transmit the fifth signal indicating cessation of operations for the second connection to the second external electronic device. For example, based on the received signal being the third signal, the processor 310 may transmit the fifth signal indicating the cessation of the operations for the second connection to the second external electronic device.

For example, the first external electronic device may transmit the third signal to the wearable device 210, in response to the establishment of the first connection. The processor 310 of the wearable device 210 may receive the fourth signal indicating the establishment of the first connection from the first external electronic device. The processor 310 may identify that the first connection of the first connection and the second connection has been established based on the third signal. The processor 310 may transmit the fifth signal indicating the cessation of the operations for the second connection, to the second external electronic device, in order to establish (or maintain) only the first connection of the first connection and the second connection.

In an operation 1270, in case that the received signal is the fourth signal, the processor 310 may cease operations for the first connection. For example, the processor 310 may cease the operations for the first connection based on the received signal being the fourth signal.

For example, the second external electronic device may transmit the fourth signal to the wearable device 210, in response to the establishment of the second connection. The processor 310 may receive the fourth signal indicating the establishment of the second connection from the second external electronic device. The processor 310 may identify that the second connection of the first connection and the second connection is established based on the third signal. The processor 310 may cease the operations for the first connection, in order to establish (or maintain) only the second connection of the first connection and the second connection.

According to the above-described embodiments, even in case that a call is not connected to a user corresponding to a third contact, the user of the wearable device 210 may make a call with a user corresponding to a fourth contact. According to the above-described embodiments, by identifying the third contact and the fourth contact based on history of the call, history of a message reception, and history of a message transmission, there is an effect that may increase a probability of a user corresponding to the third contact and a user corresponding to the fourth contact receiving the call.

According to an embodiment, a wearable device 210 may comprise at least one communication circuit 340, memory 320, at least one sensor 330, and a processor 310 operably coupled to the at least one communication circuit 340, the memory 320, and the at least one sensor 330. The processor 310 may be configured to identify, using the at least one sensor 330, that a user wearing the wearable device 210 is in a designated state. The processor 310 may be configured to, in response to identifying that the user is in the designated state, identify a first contact list among contacts stored in the memory 320 and identify, using the at least one communication circuit 340, a second contact list obtained from a first external electronic device 220 connected to the wearable device 210. The processor 310 may be configured to transmit, using the at least one communication circuit 340, a first signal for an outgoing call to a second external electronic device 232 corresponding to a third contact among a plurality of contacts included in the first contact list and the second contact list, to the second external electronic device 232. The processor 310 may be configured to transmit, using the at least one communication circuit 340, a second signal causing the first external electronic device 220 to transmit a third signal for an outgoing call to a third external electronic device 233 corresponding to a fourth contact among the plurality of contacts, to the first external electronic device 220.

According to an embodiment, the processor 310 may be configured to identify at least one of first information on history of a message reception and a message transmission, second information on history of an incoming call and an outgoing call, and third information on at least one contact set as favorites, stored in the memory 320. The processor 310 may be configured to identify fourth information on a first timing at which the user wearing the wearable device 210 is identified as the designated state. The processor 310 may be configured to, based on at least one of the first information, the second information, the third information, and the fourth information, identify the first contact list among the contacts stored in the memory 320.

According to an embodiment, the processor 310 may be configured to identify, based on a first value to a fifth value, values representing priorities of the contacts stored in the memory 320 respectively. The processor 310 may be configured to, based on the values representing the priorities of the contacts stored in the memory 320 respectively, identify the first contact list among the contacts stored in the memory 320. The first value may represent whether a target contact among the contacts stored in the memory 320, is set as the favorites. The second value may represent that a number of messages exchanged with the target contact within a first time interval related to the first timing. The third value may represent that the number of messages exchanged with the target contact within a second time interval distinct from the first time interval. The fourth value may represent a sum of time spent on call with the target contact within the first time interval. The fifth value may represent a sum of time spent on call with the target contact within the second time interval.

According to an embodiment, the processor 310 may be configured to obtain, based on the first value to the fifth value, a first calibration value to a fifth calibration value. The processor 310 may be configured to identify, based on the first calibration value to the fifth calibration value, the values representing the priorities of the contacts stored in the memory 320 respectively. The first calibration value may be obtained by applying a first weight to the first value. The second calibration value may be obtained by applying a second weight to the second value. The third calibration value may be obtained by applying a third weight to the third value. The fourth calibration value may be obtained by applying a fourth weight to the fourth value. The fifth calibration value may be obtained by applying a fifth weight to the fifth value.

According to an embodiment, the second contact list may be identified based on priorities of contacts stored in the first external electronic device 220, among the contacts stored in the first external electronic device 220.

According to an embodiment, the processor 310 may be configured to identify values representing priorities of the plurality of contacts included in the first contact list and the second contact list, respectively. The processor 310 may be configured to identify, based on the values representing the priorities of the plurality of contacts respectively, the third contact and the fourth contact.

According to an embodiment, the wearable device 210 may comprise global positioning system (GPS) circuitry. The at least one sensor 330 may comprise a gyroscope sensor and an acceleration sensor. The processor 310 may be configured to identify, using at least one of the gyroscope sensor and the acceleration sensor, that the user is in an emergency situation. The processor 310 may be configured to, based on identifying that the user is in the emergency situation, identify that the user is in the designated state. The processor 310 may be configured to, based on identifying that the user is in the emergency situation, identify a location of the user using the GPS circuitry 350.

According to an embodiment, the processor 310 may be configured to, in response to identifying that a call connection with the second external electronic device corresponding to the third contact is established, transmit, to the first external electronic device, a fourth signal causing the first external electronic device to cease operations for the outgoing call to the third external electronic device.

According to an embodiment, the processor 310 may be configured to receive, from the first external electronic device 220, a fifth signal representing that a call connection between the first external electronic device 220 and the third external electronic device 233 is established. The processor 310 may be configured to, in response to the fifth signal, cease operations for the outgoing call to the second external electronic device 232.

According to an embodiment, the wearable device 210 may comprise a second subscriber identity module (SIM) distinct from a first SIM used for the outgoing call to the second external electronic device 232. The processor 310 may be configured to transmit, to a fourth external electronic device, a sixth signal for an outgoing call to the fourth external electronic device corresponding to a fifth contact among the plurality of contacts, using the second SIM.

According to an embodiment, the processor 310 may be configured to identify a first timing at which the call connection with the second external electronic device 232 is established, and a second timing at which the call connection between the first external electronic device 220 and the third external electronic device 233 is established. The processor 310 may be configured to, based on identifying that the first timing is earlier than the second timing, transmit, to the first external electronic device 220, the fourth signal causing the first external electronic device 220 to cease the operations for the outgoing call to the third external electronic device 233.

According to an embodiment, the processor 310 may be configured to cease, based on identifying that the first timing is later than the second timing, the operations for the outgoing call to the second external electronic device 232.

According to an embodiment, the processor 310 may be configured to in response to identifying that the call connection between the first external electronic device 220 and the third external electronic device 233 is established, transmit, to the first external electronic device220, a seventh signal causing the first external electronic device 220 to transmit a message to notify that the user is in the designated state to the third external electronic device 233.

According to an embodiment, the processor 310 may be configured to, in response to identifying that the call connection with the second external electronic device 232 is established, transmit a message to notify that the user is in the designated state to the second external electronic device 232.

According to an embodiment, the method of the wearable device 210 may comprise identifying, using at least one sensor 330 of the wearable device 210, that a user wearing the wearable device 210 is in a designated state. The method may comprise, in response to identifying that the user is in the designated state, identifying a first contact list among contacts stored in memory 320 of the wearable device 210 and identifying, using at least one communication circuit 340 of the wearable device 210, a second contact list obtained from a first external electronic device 220 connected to the wearable device 210. The method may comprise transmitting, using the at least one communication circuit 340, a first signal for an outgoing call to a second external electronic device 232 corresponding to a third contact among a plurality of contacts included in the first contact list and the second contact list, to the second external electronic device 232. The method may comprise transmitting, using the at least one communication circuit 340, a second signal causing the first external electronic device 220 to transmit a third signal for an outgoing call to a third external electronic device 233 corresponding to a fourth contact among the plurality of contacts, to the first external electronic device 220.

The method may comprise identifying at least one of first information on history of a message reception and a message transmission, second information on history of an incoming call and an outgoing call, and third information on at least one contact set as favorites, stored in the memory 320. The method may comprise identifying fourth information on a first timing at which the user wearing the wearable device 210 is identified as the designated state. The method may comprise, based on at least one of the first information, the second information, the third information, and the fourth information, identifying the first contact list among the contacts stored in the memory 320.

The method may comprise identifying, based on a first value to a fifth value, values representing priorities of the contacts stored in the memory 320 respectively. The method may comprise, based on the values representing the priorities of the contacts stored in the memory 320 respectively, identifying the first contact list among the contacts stored in the memory 320. The first value may represent whether a target contact among the contacts stored in the memory 320, is set as the favorites. The second value may represent that a number of messages exchanged with the target contact within a first time interval related to the first timing. The third value may represent that the number of messages exchanged with the target contact within a second time interval distinct from the first time interval. The fourth value may represent a sum of time spent on call with the target contact within the first time interval. The fifth value may represent a sum of time spent on call with the target contact within the second time interval.

The method may comprise obtaining, based on the first value to the fifth value, a first calibration value to a fifth calibration value. The method may comprise identifying, based on the first calibration value to the fifth calibration value, the values representing the priorities of the contacts stored in the memory 320 respectively. The first calibration value may be obtained by applying a first weight to the first value. The second calibration value may be obtained by applying a second weight to the second value. The third calibration value may be obtained by applying a third weight to the third value. The fourth calibration value may be obtained by applying a fourth weight to the fourth value. The fifth calibration value may be obtained by applying a fifth weight to the fifth value.

According to an embodiment, the second contact list may be identified based on priorities of contacts stored in the first external electronic device 220, among the contacts stored in the first external electronic device 220.

According to an embodiment, a wearable device 210 may comprise at least one communication circuit 340, memory 320, at least one sensor 330, and a processor 310 operably coupled to the at least one communication circuit 340, the memory 320, and the at least one sensor 330. The processor 310 may be configured to transmit, in response to a designated state of a user wearing the wearable device 210 identified using the at least one sensor 330, a first signal for a first connection between a first external electronic device and an electronic device to the first external electronic device, and transmit a second signal for a second connection between a second external electronic device and the third external electronic device to the second external electronic device, using the at least one communication circuit 340. The processor 310 may be configured to identify whether one of a third signal from the first external electronic device indicating establishment of the first connection and a fourth signal from the second external electronic device indicating establishment of the second connection is received, in response to the transmission of the first signal and the transmission of the second signal. The processor 310 may be configured to transmit a fifth signal indicating cessation of operations for the second connection to the second external electronic device, in response to receiving the third signal among the third signal and the fourth signal. The processor 310 may be configured to cease operations for the first connection, in response to reception of the fourth signal among the third signal and the fourth signal.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element),

# EP 4 561 038 A1

it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (210) comprising:

   at least one communication circuit (340);
   memory (320);
   at least one sensor (330); and
   a processor (310) operably coupled to the at least one communication circuit (340), the memory (320), and the at least one sensor (330), wherein the processor (310) is configured to:

   identify, using the at least one sensor (330), that a user wearing the wearable device (210) is in a designated state,
   in response to identifying that the user is in the designated state, identify a first contact list among contacts stored in the memory (320) and identify, using the at least one communication circuit (340), a second contact list obtained from a first external electronic device (220) connected to the wearable device (210),
   transmit, using the at least one communication circuit (340), a first signal for an outgoing call to a second external electronic device (232) corresponding to a third contact among a plurality of contacts included in the first contact list and the second contact list, to the second external electronic device (232), and
   transmit, using the at least one communication circuit (340), a second signal causing the first external electronic device (220) to transmit a third signal for an outgoing call to a third external electronic device (233) corresponding to a fourth contact among the plurality of contacts, to the first external electronic device (220).

2. The wearable device (210) of claim 1, wherein the processor (310) is further configured to:

identify at least one of first information on history of a message reception and a message transmission, second information on history of an incoming call and an outgoing call, and third information on at least one contact set as favorites, stored in the memory (320),
identify fourth information on a first timing at which the user wearing the wearable device (210) is identified in the designated state, and
based on at least one of the first information, the second information, the third information, and the fourth information, identify the first contact list among the contacts stored in the memory (320).

3. The wearable device (210) of claim 2, wherein the processor (310) is further configured to:

identify, based on a first value to a fifth value, values representing priorities of the contacts stored in the memory (320) respectively, and
based on the values representing the priorities of the contacts stored in the memory (320) respectively, identify the first contact list among the contacts stored in the memory (320), and
wherein the first value represents whether a target contact among the contacts stored in the memory (320), is set as the favorites,
wherein the second value represents that a number of messages exchanged with the target contact within a first time interval related to the first timing,
wherein the third value represents that the number of messages exchanged with the target contact within a second time interval distinct from the first time interval,
wherein the fourth value represents a sum of time spent on call with the target contact within the first time interval, and
wherein the fifth value represents a sum of time spent on call with the target contact within the second time interval.

4. The wearable device (210) of claim 3, wherein the processor (310) is further configured to:

obtain, based on the first value to the fifth value, a first calibration value to a fifth calibration value, and
identify, based on the first calibration value to the fifth calibration value, the values representing the priorities of the contacts stored in the memory (320) respectively, and
wherein the first calibration value is obtained by applying a first weight to the first value,
wherein the second calibration value is obtained by applying a second weight to the second value,
wherein the third calibration value is obtained by applying a third weight to the third value,
wherein the fourth calibration value is obtained by applying a fourth weight to the fourth value, and
wherein the fifth calibration value is obtained by applying a fifth weight to the fifth value.

5. The wearable device (210) of any one of claims 1 to 4, wherein the second contact list is identified based on priorities of contacts stored in the first external electronic device (220), among the contacts stored in the first external electronic device (220).

6. The wearable device (210) of any one of claims 1 to 5, wherein the processor (310) is further configured to:

identify values representing priorities of the plurality of contacts included in the first contact list and the second contact list, respectively, and
identify, based on the values representing the priorities of the plurality of contacts respectively, the third contact and the fourth contact.

7. The wearable device (210) of any one of claims 1 to 6, further comprising global positioning system (GPS) circuitry,

wherein the at least one sensor (330) comprises a gyroscope sensor and an acceleration sensor, and
wherein the processor (310) is further configured to:

identify, using at least one of the gyroscope sensor and the acceleration sensor, that the user is in an emergency situation,
based on identifying that the user is in the emergency situation, identify that the user is in the designated state, and
based on identifying that the user is in the emergency situation, identify a location of the user using the GPS circuitry.

8. The wearable device (210) of any one of claims 1 to 7, wherein the processor (310) is further configured to:
in response to identifying that a call connection with the second external electronic device (232) corresponding to the third contact is established, transmit, to the first external electronic device (220), a fourth signal causing the first external electronic device (220) to cease operations for the outgoing call to the third external electronic device (233).

9. The wearable device (210) of any one of claims 1 to 8, wherein the processor (310) is further configured to:

   receive, from the first external electronic device (220), a fifth signal representing that a call connection between the first external electronic device (220) and the third external electronic device (233) is established, and
   in response to the fifth signal, cease operations for the outgoing call to the second external electronic device (232).

10. The wearable device (210) of any one of claims 1 to 9, further comprising a second subscriber identity module (SIM) distinct from a first SIM used for the outgoing call to the second external electronic device (232), and
wherein the processor (310) is further configured to:
transmit, to a fourth external electronic device, a sixth signal for an outgoing call to the fourth external electronic device corresponding to a fifth contact among the plurality of contacts, using the second SIM.

11. The wearable device (210) of any one of claims 1 to 10, wherein the processor (310) is further configured to:

   identify a first timing at which the call connection with the second external electronic device (232) is established and a second timing at which the call connection between the first external electronic device (220) and the third external electronic device (233) is established, and
   based on identifying that the first timing is earlier than the second timing, transmit, to the first external electronic device (220), the fourth signal causing the first external electronic device (220) to cease the operations for the outgoing call to the third external electronic device (233).

12. The wearable device (210) of claim 11, wherein the processor (310) is further configured to cease, based on identifying that the first timing is later than the second timing, the operations for the outgoing call to the second external electronic device (232).

13. The wearable device (210) of any one of claims 1 to 12, wherein the processor (310) is further configured to:
in response to identifying that the call connection between the first external electronic device (220) and the third external electronic device (233) is established, transmit, to the first external electronic device (220), a seventh signal causing the first external electronic device (220) to transmit a message to notify that the user is in the designated state to the third external electronic device (233).

14. The wearable device (210) of any one of claims 1 to 13, wherein the processor (310) is further configured to:
in response to identifying that the call connection with the second external electronic device (232) is established, transmit a message to notify that the user is in the designated state to the second external electronic device (232).

15. A method of a wearable device (210), comprising:

   identifying, using at least one sensor (330) of the wearable device (210), that a user wearing the wearable device (210) is in a designated state,
   in response to identifying that the user is in the designated state, identifying a first contact list among contacts stored in memory (320) of the wearable device (210) and identifying, using at least one communication circuit (340) of the wearable device (210), a second contact list obtained from a first external electronic device (220) connected to the wearable device (210),
   transmitting, using the at least one communication circuit (340), a first signal for an outgoing call to a second external electronic device (232) corresponding to a third contact among a plurality of contacts included in the first contact list and the second contact list, to the second external electronic device (232), and
   transmitting, using the at least one communication circuit (340), a second signal causing the first external electronic device (220) to transmit a third signal for an outgoing call to a third external electronic device (233) corresponding to a fourth contact among the plurality of contacts, to the first external electronic device (220).

EP 4 561 038 A1

FIG. 1

FIG. 2

FIG. 3

220

440

COMMUNICATION
CIRCUIT

430

SENSOR

410

PROCESSOR

450

GPS CIRCUITRY

420

MEMORY

FIG. 4

IDENTIFY THAT USER WEARING
WEARABLE DEVICE IS IN DESIGNATED STATE — 510

IDENTIFY FIRST CONTACT LIST
AND SECOND CONTACT LIST — 520

TRANSMIT FIRST SIGNAL TO
SECOND EXTERNAL ELECTRONIC DEVICE — 530

TRANSMIT SECOND SIGNAL TO
FIRST EXTERNAL ELECTRONIC DEVICE — 540

FIG. 5

210

WEARABLE DEVICE

220

FIRST EXTERNAL
ELECTRONIC DEVICE

601

IDENTIFY FIRST CONTACT
LIST AMONG CONTACTS
STORED IN MEMORY OF
WEARABLE DEVICE

602

IDENTIFY SECOND CONTACT
LIST AMONG CONTACTS
STORED IN MEMORY OF FIRST
EXTERNAL ELECTRONIC DEVICE

603

SECOND CONTACT LIST

604

IDENTIFY SECOND
CONTACT LIST

605

IDENTIFY THIRD CONTACT AND
FOURTH CONTACT AMONG
PLURALITY OF CONTACTS

FIG. 6A

210

HISTORY OF MESSAGE
RECEPTION AND
MESSAGE TRANSMISSION

611

AT LEAST ONE
CONTACT SET
AS FAVORITES

IDENTIFY FIRST
CONTACT LIST

HISTORY OF
INCOMING CALL
AND OUTGOING CALL

612

STORE FIRST
CONTACT LIST

613

GENERATE EMERGENCY CONTACT LIST
COMPOSED OF FIRST CONTACT LIST
AND SECOND CONTACT LIST

220

622

STORE SECOND
CONTACT LIST

621

AT LEAST ONE
CONTACT SET
AS FAVORITES

IDENTIFY SECOND
CONTACT LIST

HISTORY OF
INCOMING CALL
AND OUTGOING CALL

HISTORY OF MESSAGE
RECEPTION AND
MESSAGE TRANSMISSION

FIG. 6B

FIG. 7

210      220      232      233

| WEARABLE DEVICE | FIRST EXTERNAL ELECTRONIC DEVICE | SECOND EXTERNAL ELECTRONIC DEVICE | THIRD EXTERNAL ELECTRONIC DEVICE |

801
IDENTIFY THAT USER IS IN DESIGNATED STATE

INFORMATION INDICATING THAT USER IS IN DESIGNATED STATE

803    802

IDENTIFY THIRD CONTACT AND FOURTH CONTACT AMONG PLURALITY OF CONTACTS INCLUDED IN FIRST CONTACT LIST AND SECOND CONTACT LIST

804
FIRST SIGNAL

805
SECOND SIGNAL

806
THIRD SIGNAL

807
ESTABLISH CALL CONNECTION

808
FOURTH SIGNAL

809
CEASE OPERATIONS FOR OUTGOING CALL TO THIRD EXTERNAL ELECTRONIC DEVICE

810
MESSAGE TO NOTIFY THAT USER IS IN DESIGNATED STATE

FIG. 8

| 210 | 220 | 232 | 233 |
|---|---|---|---|
| WEARABLE DEVICE | FIRST EXTERNAL ELECTRONIC DEVICE | SECOND EXTERNAL ELECTRONIC DEVICE | THIRD EXTERNAL ELECTRONIC DEVICE |

901
IDENTIFY THAT USER IS IN DESIGNATED STATE

INFORMATION INDICATING THAT USER IS IN DESIGNATED STATE

902

903
IDENTIFY THIRD CONTACT AND FOURTH CONTACT AMONG PLURALITY OF CONTACTS INCLUDED IN FIRST CONTACT LIST AND SECOND CONTACT LIST

904
FIRST SIGNAL

905
SECOND SIGNAL

906
THIRD SIGNAL

908
ESTABLISH CALL CONNECTION

909
FIFTH SIGNAL

910
CEASE OPERATIONS FOR OUTGOING CALL TO SECOND EXTERNAL ELECTRONIC DEVICE

911
MESSAGE TO NOTIFY THAT USER IS IN DESIGNATED STATE

FIG. 9

FIG. 10

210
WEARABLE DEVICE

220
FIRST EXTERNAL ELECTRONIC DEVICE

232
SECOND EXTERNAL ELECTRONIC DEVICE

233
THIRD EXTERNAL ELECTRONIC DEVICE

1101
IDENTIFY THAT USER IS IN DESIGNATED STATE

INFORMATION INDICATING THAT USER IS IN DESIGNATED STATE

1102

1103
IDENTIFY THIRD CONTACT AMONG FIRST CONTACT LIST

1104
IDENTIFY FOURTH CONTACT AMONG SECOND CONTACT LIST

FIRST SIGNAL
1105

THIRD SIGNAL
1106

ESTABLISH CALL CONNECTION
1107

FIFTH SIGNAL
1108

1109
CEASE OPERATIONS FOR OUTGOING CALL TO SECOND EXTERNAL ELECTRONIC DEVICE

MESSAGE TO NOTIFY THAT USER IS IN DESIGNATED STATE
1110

FIG. 11

FIG. 12

## INTERNATIONAL SEARCH REPORT

International application No.

**PCT/KR2023/008708**

| A. | CLASSIFICATION OF SUBJECT MATTER |
|---|---|

**H04M 1/2749**(2020.01)i; **H04M 1/72412**(2021.01)i; **G04G 21/02**(2010.01)i; **G04G 21/04**(2010.01)i; **H04M 1/27453**(2020.01)i

According to International Patent Classification (IPC) or to both national classification and IPC

| B. | FIELDS SEARCHED |
|---|---|

Minimum documentation searched (classification system followed by classification symbols)

H04M 1/2749(2020.01); A61B 5/00(2006.01); G06F 3/048(2006.01); G08B 25/04(2006.01); H04B 1/3827(2015.01); H04M 3/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨어러블 장치(wearable device), 식별(identification), 제1 연락처(first contact), 제2 연락처(second contact), 응급 상황(emergency), 발신 전화(outgoing call)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2018-0023942 A (PRINCO CORPORATION) 07 March 2018 (2018-03-07)<br>See paragraphs [0025]-[0029] and figures 2-4. | 1-15 |
| A | KR 10-2008-0008779 A (MICROTECH CO., LTD.) 24 January 2008 (2008-01-24)<br>See paragraphs [0066]-[0067] and figure 2. | 1-15 |
| A | KR 10-2020-0134384 A (KEZ CO., LTD.) 02 December 2020 (2020-12-02)<br>See paragraphs [0040]-[0064] and figures 1-2. | 1-15 |
| A | KR 10-2013-0063839 A (LG ELECTRONICS INC.) 17 June 2013 (2013-06-17)<br>See paragraphs [0135]-[0136] and figure 12. | 1-15 |
| A | JP 2006-350869 A (SHARP CORP.) 28 December 2006 (2006-12-28)<br>See paragraphs [0074]-[0087] and figure 1. | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/008708**

| Patent document cited in search report | | | Publication date (day/month/year) | Patent family member(s) | | | Publication date (day/month/year) |
|---|---|---|---|---|---|---|---|
| KR | 10-2018-0023942 | A | 07 March 2018 | CN | 106686566 | A | 17 May 2017 |
| | | | | EP | 3165972 | A1 | 10 May 2017 |
| | | | | JP | 2017-090430 | A | 25 May 2017 |
| | | | | JP | 6148747 | B2 | 14 June 2017 |
| | | | | KR | 10-1902808 | B1 | 01 October 2018 |
| | | | | KR | 10-2017-0053552 | A | 16 May 2017 |
| | | | | TW | 201716892 | A | 16 May 2017 |
| | | | | TW | I585555 | B | 01 June 2017 |
| | | | | US | 10219128 | B2 | 26 February 2019 |
| | | | | US | 2017-0134922 | A1 | 11 May 2017 |
| KR | 10-2008-0008779 | A | 24 January 2008 | KR | 10-0815268 | B1 | 20 March 2008 |
| KR | 10-2020-0134384 | A | 02 December 2020 | KR | 10-2245963 | B1 | 29 April 2021 |
| KR | 10-2013-0063839 | A | 17 June 2013 | CN | 103152473 | A | 12 June 2013 |
| | | | | CN | 103152473 | B | 24 December 2014 |
| | | | | EP | 2602977 | A1 | 12 June 2013 |
| | | | | EP | 2602977 | B1 | 15 February 2017 |
| | | | | KR | 10-1890674 | B1 | 22 August 2018 |
| | | | | US | 2013-0149989 | A1 | 13 June 2013 |
| | | | | US | 2015-0119007 | A1 | 30 April 2015 |
| | | | | US | 8954031 | B2 | 10 February 2015 |
| | | | | US | 9414206 | B2 | 09 August 2016 |
| JP | 2006-350869 | A | 28 December 2006 | US | 2007-0024450 | A1 | 01 February 2007 |

Form PCT/ISA/210 (patent family annex) (July 2022)